# EUROPEAN PATENT APPLICATION

(11) **EP 4 674 745 A1**
(43) Date of publication of application: **07.01.2026**
(21) Application number: 24306089.4
(22) Date of filing: 02.07.2024
(51) Int. Cl.: B63B 21/20

(54) **MOORING LINE FOR A FLOATING PLATFORM, INCLUDING A SEGMENT COMPRISING AN ELASTOMERIC MATERIAL**

(71) Applicant: TotalEnergies OneTech, 92400 Courbevoie (FR); Techlam, 68700 Cernay (FR)
(72) Inventor: LIBOLT, Joël, 68700 CERNAY (FR); SKRABER, Alain, 68700 CERNAY (FR); BUJEAU, Benjamin, 68700 CERNAY (FR); GRIMALDI D'ESDRA, Gaétan, 68700 CERNAY (FR); LE-GUENNEC, Stephane, 92400 COURBEVOIE (FR); BARRIER, Phillipe, 92400 COURBEVOIE (FR)
(74) Representative: Lavoix

(57) **Abstract**

A mooring including a segment (24) comprising two extremities (26, 28), and strands (30) comprising an elastomeric material and extending between the two extremities along a longitudinal direction (L) when the strands are subject to tensioning efforts,
each of the strands having two end parts (44) and a median part (46) along the longitudinal direction,
the median part having a cross-section (8) with an elongated shape in a first transverse direction (T1) perpendicular to the longitudinal direction, and a width (L2) in a second transverse direction (T2) perpendicular to the first transverse direction,
at least one of the two extremities comprising steel and being adapted for applying the tensioning efforts,
one of the two end parts having an enlarged portion (52) with a maximum width (L3) along the second transverse direction when the strands are at rest and parallel to each other, the maximum width being greater than the width (L2).

## Description

### FIELD

The present disclosure relates to a mooring line intended to be attached to a floating platform, in particular a wind turbine platform, and to an anchoring system fixed to a seabed.

The disclosure also relates to an assembly comprising the floating platform, the anchoring system and at least such a mooring line.

### BACKGROUND

A floating platform needs to be moored to the seabed. For a wind turbine platform, this is challenging due to relatively shallow waters and potential severe environmental conditions making the assembly quite dynamic with large tension peaks in the mooring line.

Usually, the mooring lines are quite long with respect to the water depth for allowing sufficient softness in the mooring system in order to maintain the tension below an acceptable level. With typical mooring systems, mooring lines may be more than ten times longer than the water depth in shallow waters and harsh environmental conditions, which results in high mooring costs.

Some known systems have been proposed to address this issue, by providing elasticity in the mooring lines, but none of them is deemed to be satisfactory.

For example, mechanical components using stainless steel have been proposed, but their integrity over twenty years of the service life in sea water is an issue, as well as their real cost effectiveness.

It has been proposed to use the elasticity provided by an elastomeric material in a mooring line. However, the interface between such a material and the rest of the mooring line raises serious issues.

An aim of the invention is to overcome or reduce the above mentioned issues, by providing a mooring line able to cope with severe environmental conditions, such as those encountered in shallow waters, while being cheaper.

### SUMMARY OF THE INVENTION

To this end, the invention proposes a mooring line intended to be attached to a floating platform, in particular a wind turbine platform, and to an anchoring system fixed to a seabed, the mooring line including a segment,
the segment comprising two extremities , and a plurality of strands comprising an elastomeric material and extending between the two extremities along a longitudinal direction when the strands are respectively subject to tensioning efforts,
each of the strands having two end parts and a median part along the longitudinal direction,
the median part having a cross-section perpendicularly to the longitudinal direction, the cross-section having an elongated shape when the strands are at rest, the elongated shape defining a length in a first transverse direction perpendicular to the longitudinal direction, and a width in a second transverse direction perpendicular to the longitudinal direction and to the first transverse direction,
at least one of the two extremities comprising steel and being adapted for applying each of the tensioning efforts respectively on one of the two end parts of each of the strands,
said one of the two end parts of each of the strands having an enlarged portion with a maximum width along the second transverse direction when the strands are at rest and parallel to each other, the maximum width of said one of the two end parts being greater than the width of the elongated shape.

In other embodiments, the mooring line may comprise one or several of the following features, taken in isolation or any technically feasible combination:
- the cross-section has a rectangular shape with rounded corners;
- a ratio of the length of the elongated shape divided by the width of the elongated shape is comprised between 3.0 and 20, preferably between 5.0 and 10;
- a ratio of said maximum width divided by the width of the elongated shape is comprised between 1.3 and 6;
- said one of the two extremities defines a plurality of primary housings, and comprises a plurality of blocking members, each of the primary housings being adapted for respectively receiving one of the blocking members for forming a secondary housing adapted to receive said enlarged portion, said enlarged portion being adapted for being retained in the secondary housing;
- said enlarged portion has a flaring shape away from the median part with an increasing width defined along the second transverse direction; and said secondary housing has a flaring shape adapted for cooperating with the flaring shape of said enlarged portion in order to retain said enlarged portion in the secondary housing;
- each of the primary housings is delimited by two opposite walls along the second transverse direction; said enlarged portion defines two lateral surfaces along the second transverse direction; and each of the blocking members defines two opposite surfaces along the second transverse direction adapted for being in surface contact respectively with one of said two walls and one of said two lateral surfaces, the other one of said two lateral surfaces being in surface contact with the other one of said two walls;
- said two opposite walls define a flaring shape away from the median part with an increasing width defined along the second transverse direction; and said two opposite surfaces define a width along the second transverse direction, said width decreasing away from the median part;
- said one of the two end parts of each of the strands comprises: two branches comprising an elastomeric material, the two branches protruding from said enlarged portion in the longitudinal direction and being spaced apart from each other in the second transverse direction; and a wedge member fixed to the two branches and extending between the two branches in the second transverse direction;
- said strands form a plurality of loops, each of the loops comprising one of the two end parts of one of the strands and one of the two end parts of another one of the strand; and said one of the two extremities comprises a plurality of supports partially surrounded by one of the loops, each of the supports being adapted for apply an effort on one of the loops, said effort being a sum of two of said tensioning efforts;
- each of the supports extends along the first transverse direction, each of the loops at least partially surrounding one of the supports about the first transverse direction;
- each of the loops is formed by two of the strands, said two of the strands being successive in the second transverse direction;
- each of the supports comprises a low friction material, such as PTFE, in contact with one of the loops;
- said one of the two extremities comprises a main part, each of the supports comprising: a shaft movable with respect to the main part between a mounted position, in which the shaft is mounted on the main part, and rest position, in which the shaft is away from the main part; and a peripheral part at least partly surrounding the shaft.

The invention also proposes an assembly comprising:
- a floating platform, preferably a wind turbine platform, adapted for floating on a body of water,
- an anchoring system adapted for being fixed to a seabed, and
- at least one mooring line as described above, the mooring line being attached to the platform and to the anchoring system.

### BRIEF DESCRIPTION OF THE DRAWINGS

The disclosure and its advantages will be better understood upon reading the following description, given solely by way of example and with reference to the appended drawings, in which:
- Figure 1 is a schematic side view of an assembly according to the invention,
- Figure 2 is a schematic view of a portion of a mooring line represented in Figure 1,
- Figure 3 is a perspective view of a segment of the portion shown in Figure 2 according to a first embodiment, the segment being represented in a vertical position,
- Figure 4 is a perspective view of an extremity of the segment shown in Figure 3,
- Figure 5 is partial cross sectional view of the extremity represented in Figure 4, along a plane crossing several strands of the segment, showing how the strands are attached to the extremity,
- Figure 6 is a perspective view of an extremity of the segment shown in Figure 2 according to a second embodiment, and
- Figure 7 is partial cross sectional view of the extremity represented in Figure 6, along a plane crossing several strands of the segment, showing how the strands are attached to the extremity.

### DETAILED DESCRIPTION

### Assembly

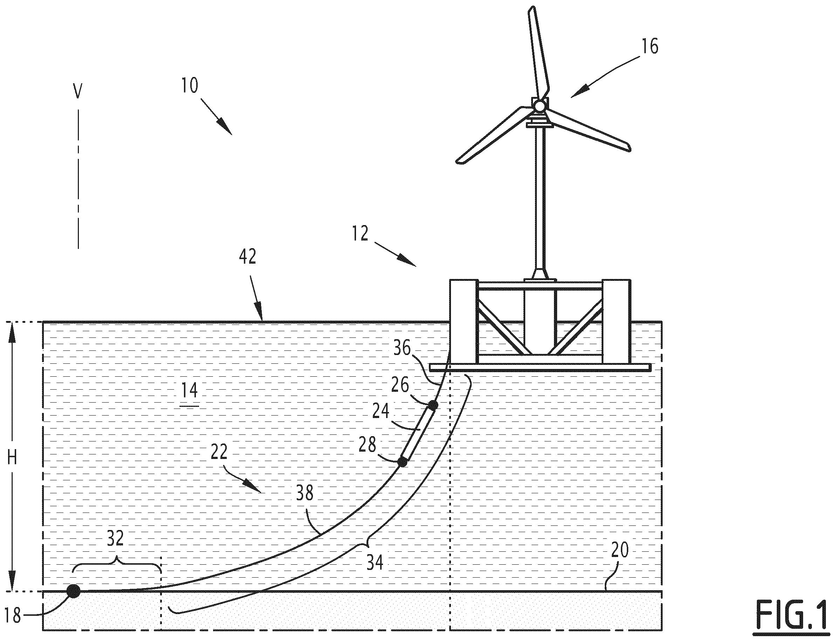

With reference to Figure 1, an assembly 10 according to the invention will be described.

The assembly comprises a platform 12 adapted for floating on a body of water 14, advantageously a wind turbine 16 supported by the platform, and an anchoring system 18 adapted for being fixed to a seabed 20.

The assembly 10 comprises a mooring line 22 attached to the platform 12 and to the anchoring system 18.

Advantageously the assembly 10 may comprises other mooring lines (not shown), for example analogous to the mooring line 22, and/or other mooring systems (not shown). In a particular embodiment (not shown), the platform 12 is attached to two more mooring lines.

The body of water 14 may be an ocean, a sea or a lake. The body water 14 presents a water depth H according to a vertical direction V, for example comprised between 50 m and 600 m, advantageously between 50 m and 200 m.

### Mooring line

The mooring line 22 advantageously has a length smaller than six times the water height H in shallow waters. By "shallow waters", it is for example meant a water depth between 50 and 150 m.

The mooring line 22 according to the invention is therefore shorter than a conventional mooring line, in particular for an all chain conventional configuration, which typically presents a length greater than eight times the water height H. This reduced length enables an important cost reduction.

For example, if the water height H is about 70 m high, a conventional mooring line would present a length of approximately 700 m, whereas the mooring line 22 has a length smaller than 400 m with equivalent, or even lower, extreme tensions.

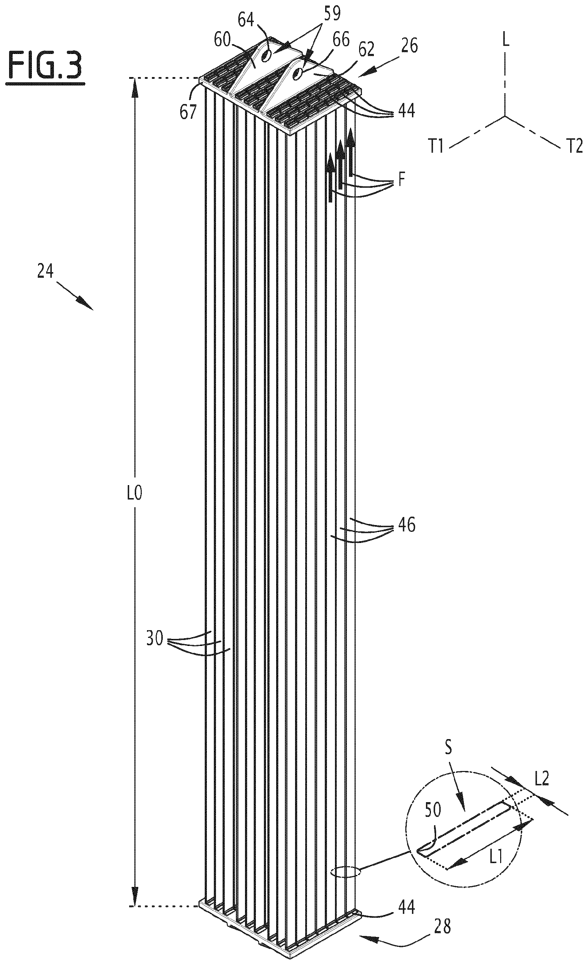

The mooring line 22 includes a segment 24 comprising two extremities 26, 28, and a plurality of strands 30 (Figure 3) extending between the two extremities along a longitudinal direction L when the strands 30 are respectively subject to tensioning efforts F.

In the example, as shown in Figure 1, the mooring line 22 comprises a resting part 32 resting on the seabed 14 and a raised part 34 away from the seabed.

In a variant (not shown), the mooring line 22 does not comprise a resting part on the seabed, notably in case of taut mooring.

In the example, the mooring line 22 comprises an upper segment 36 connected to the platform 12 and to one of the two extremities 26, 28 of the segment 24, and a lower segment 38 connected to the anchoring system 18 and to the other of the two extremities 26, 28.

According to a variant (not shown), there is no upper segment 36 and the extremity 26 is connected to the platform 12.

According to another variant (not shown), there is no lower segment 38 and the extremity 28 is connected to the anchoring system 18.

In other variants (not shown), the mooring line 22 may comprise one or more other segments (not shown) analogous to the segment 24, connected to each other or to intermediate segments (not shown).

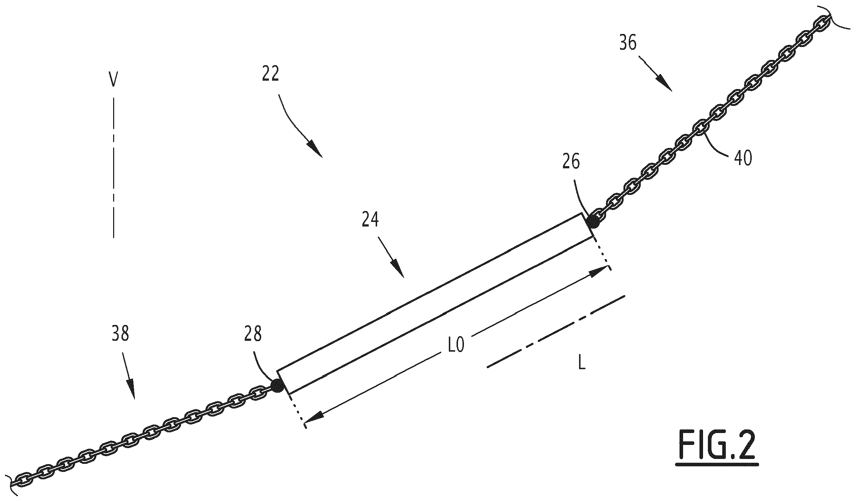

The upper segment 36 and/or the lower segment 38 are for example made of steel, notably a steel wire or a metal chain 40 as represented in Figure 2.

In a variant, the upper segment 36 and/or the lower segment 38 are made of a synthetic fiber rope, notably a synthetic polyester line or a nylon rope.

In another variant, the upper segment 36 and/or the lower segment 38 may be composed of several sub-segments (not shown), each sub-segment being possibly made of a different material, such as steel or polyester for example.

The upper segment 36 and the lower segment 38 therefore present a significant stiffness, notably greater than that of the segment 24.

### Segment of the mooring line according to a first embodiment

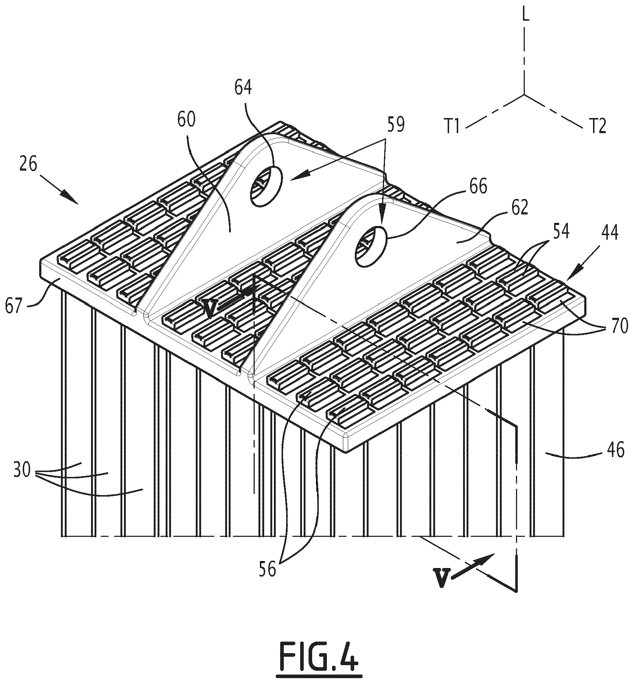

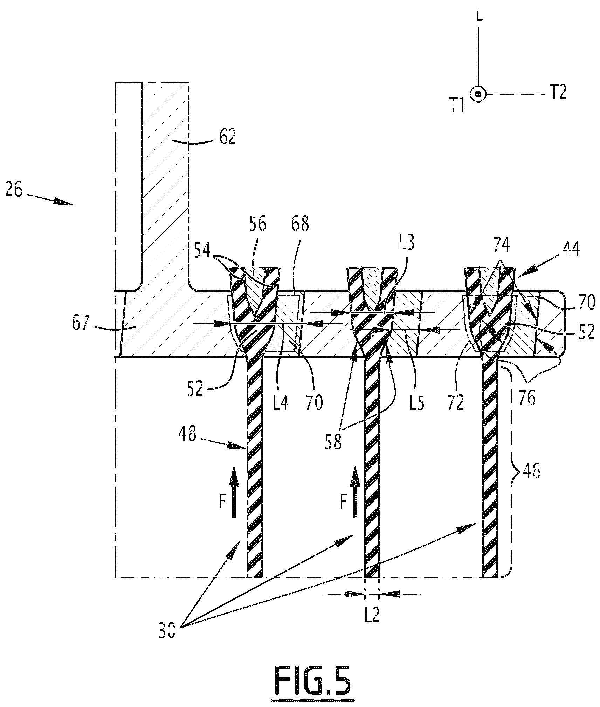

A first embodiment will now be described with reference to Figures 3 to 5.

The segment 24 is advantageously arranged in the raised part 34 in order to avoid abrasion caused by the seabed 14.

The segment 24 may be located at any level along the vertical direction V in the raised part 32. However, the segment 24 is preferably arranged deep enough below a surface 42 of the body of water 14, notably deeper than 20 m, in order to avoid UV exposure and to limit marine growth.

Advantageously, the segment 24 comprises between 30 and 350 strands, for example between 30 and 150 strands, preferably between 40 and 130 strands, and for example 64 strands.

The segment 24 preferably has a length L0 at rest comprised between 10 m and 30 m.

The segment 24 is able to provide a maximal extension greater than 100 % of the rest length of the segment, advantageously a maximal extension greater than 300 %, even more advantageously greater than 500 %.

Typically, the segment 24 presents a maximal elongation length greater than 10 m.

The elasticity of the segment 24 is provided by the elastomeric material. It allows limiting the maximum tension supported by the mooring line 22.

The segment 24 presents a minimal breaking strength greater than 15 MPa, preferably greater than 18 MPa, advantageously greater than 22 MPa.

The segment 24 presents a minimal breaking load greater than 400 T, advantageously greater than 1200 T.

The segment 24 presents a creep lower than 20%, advantageously lower than 10%.

The creep is the permanent elongation under constant load from its initial length L0 due to stretching of the polymer. By initial length it is meant the length L0 at the beginning of the service life, without load.

### Strands

Advantageously, the strands 30 are structurally analogous to each other. The strands 30 have thus substantially the same mechanical properties, notably the same maximal extension and minimal breaking strength.

The strands 30 comprise an elastomeric material.

Preferably, the strands 30 are devoid of any metal.

The strands 30 are advantageously devoid of other material or mechanical piece in addition to the elastomeric material.

The single material composing the strands 30 is for example chosen among natural rubber, thermoplastic elastomer, polychloroprene, nitrile butadiene rubber (NBR) and hydrogenated nitrile butadiene rubber (HNBR). The single material is advantageously vulcanized.

Each of the strands 30 has two end parts 44 and a median 46 part along the longitudinal direction L.

For example, the strands 30 are at least partially coated with a protective composition 48, for example preventing fouling.

### Median part of the strands

The median part 46 has a cross-section S (Figure 3) perpendicularly to the longitudinal direction L.

The cross-section S has an elongated shape when the strands 30 are at rest, the elongated shape defining a length L1 in a first transverse direction T1 perpendicular to the longitudinal direction L, and a width L2 in a second transverse direction T2 perpendicular to the longitudinal direction L and to the first transverse direction T1. In other words, cross-section S is elongated in the first transverse direction T1, the length L1 being greater than the width L2.

The cross-section S for example has a rectangular shape with rounded corners 50.

The ratio of the length L1 of the elongated shape divided by the width L2 of the elongated shape is advantageously comprised between 3.0 and 20, preferably between 5.0 and 10.

For example, the length L1 is comprised between 200 mm and 350 mm.

For example, the width L2 is comprised between 30 mm and 50 mm.

### End parts of the strands

The two end parts 44 of each of the strands 30 are advantageously analogous to each other.

The end parts 44 have an enlarged portion 52 with a maximum width L3 along the second transverse direction T2 when the strands 30 are at rest and parallel to each other (i.e without any torsion about the longitudinal direction L). The end parts 44 advantageously comprise two branches 54, and a wedge member 56.

The maximum width L3 of the end parts 44 is greater than the width L2 of the elongated shape.

The enlarged portion 52 defines two lateral surfaces 58 along the second transverse direction T2.

The ratio of the maximum width L3 divided by the width L2 of the elongated shape is advantageously comprised between 1.3 and 6.

For example, the enlarged portion 52 has a flaring shape away from the median part 46 with an increasing width L3 defined along the second transverse direction T2.

The two branches 54 comprise the elastomeric material, protrude from the enlarged portion 52 in the longitudinal direction L and are for example spaced apart from each other in the second transverse direction T2.

The wedge member 56 is for example fixed to the two branches 54 and extends between the two branches in the second transverse direction T2.

### Extremities of the segment

Advantageously, the two extremities 26, 28 are structurally analogous to each other.

The two extremities 26, 28 comprise steel, and are advantageously made of steel. The two extremities 26, 28 are adapted for applying each of the tensioning efforts F respectively on one of the two end parts 44 of each of the strands 30.

The two extremities 26, 28 define one or more attachment points 59 for connection to another segment, to the platform 12 or to the anchoring system 18. In the example, each of the two extremities 26, 28 comprises two plates 60, 62 respectively defining two orifices 64, 66.

In the first embodiment, the two extremities 26, 28 comprises a plate 67 for example defining a plurality of primary housings 68, and comprises a plurality of blocking members 70.

The plate 67 for example extends perpendicularly to the longitudinal direction.

Each of the primary housings 68 is adapted for respectively receiving one of the blocking members 70 for forming a secondary housing 72 adapted to receive the enlarged portion 52 of the end parts 44, and to retain the enlarged portion.

The primary housings 68 advantageously form rows of housings in the first transverse direction T1 and/or in the second transverse direction T2.

Each of the primary housings 68 is for example delimited by two opposite walls 74 along the second transverse direction T2.

The secondary housing 72 has a flaring shape adapted for cooperating with the flaring shape of the enlarged portion 52 in order to retain said enlarged portion in the secondary housing.

Each of the blocking members 70 defines two opposite surfaces 76 along the second transverse direction T2 adapted for being in surface contact respectively with one of said two walls 74 and one of said two lateral surface 59, the other one of said two lateral surfaces being in surface contact with the other one of said two walls 74.

The two opposite walls 74 advantageously define a flaring shape away from the median part 46 with an increasing width L4 defined along the second transverse direction T2.

The two opposite surfaces 76 advantageously define a width L5 along the second transverse direction T2, said width L5 decreasing away from the median part 46.

### Segment of the mooring line according to a second embodiment

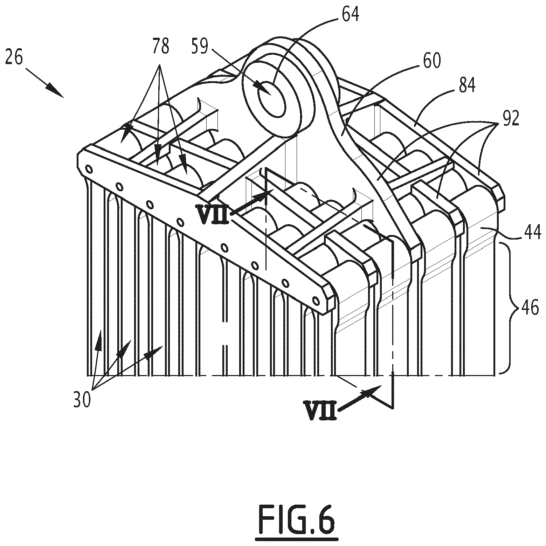

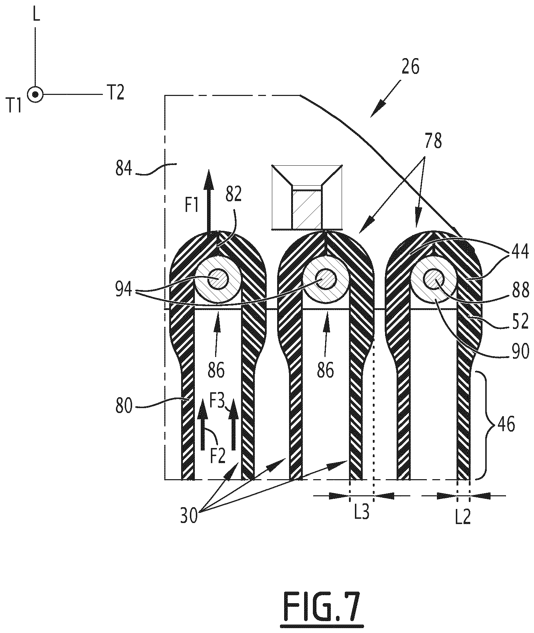

A second embodiment will now be described with reference to Figures 6 and 7.

The second embodiment is analogous to the first embodiment shown in Figures 3 to 5. Similar elements bear the same numeral references and will not be described again. Only the differences will be described in detail hereafter.

In the second embodiment, only the two end parts 44 of the strands 30 and the two extremities 26, 28 differ from the first embodiment.

The strands 30 advantageously form a plurality of loops 78. Each of the loops 78 comprises the end part 44 of one of the strands 30 and the end part of another of the strands. These two end parts 44 are advantageously directly connected with each other in order to form one of the loops 78.

The loops 78 are for example obtained by welding a strip 80 on itself. Advantageously, the weld 82 is located within the enlarged portion.

Each of the loops 78 is for example formed by two of the strands 30, said two of the strands being successive in the second transverse direction T2.

The two extremities 26, 28 comprise a main part 84, and a plurality of supports 86 partially surrounded by the loops 78.

Each of the supports 86 is adapted for apply an effort F1 on one of the loops 78, said effort F1 being the sum of two of the tensioning efforts F2, F3 applied to the strands 30.

Each of the supports 86 advantageously comprises a low friction material, such as PTFE, in contact with one of the loops 78.

Each of the supports 86 for example comprises a shaft 88 movable with respect to the main part 84 between a mounted position, in which the shaft is mounted on the main part, and rest position, in which the shaft is away from the main part. Each of the supports 86 for example comprises a peripheral part 90 surrounding the shaft 88.

Each of the supports 86 for example extends along the first transverse direction T1, each of the loops 78 partially surrounding one of the supports 86 about the first transverse direction T1.

The main part 84 for example comprises a plurality of plates 92 extending perpendicularly to the first transverse direction T1, each of the plates defining orifices 94, the shaft 88 being received in two of the orifices 84, the two orifices being in two distinct plates among said plates 92.

### Advantages

Thanks to the above described features, the mooring line 22 is able to cope with severe environmental conditions, such as those encountered in shallow waters, while being cheaper.

In particular, the segment 24 enables to limit the maximum tension supported by the mooring line 22 while reducing its length. Indeed, the elastomeric material provides elasticity enabling the mooring line 22 to withstand the severe environmental conditions.

The elongated shape of the median part 46 of the strands 30 allows improving the vulcanization process.

The enlarged portion 52 of the two end parts 44 provides an improved interface between the strands 30 and the two extremities 26, 28.

In particular, in the second embodiment, the loops 78 provide a strong interface.

## Claims

1. A mooring line (22) intended to be attached to a floating platform (12), in particular a wind turbine platform, and to an anchoring system (18) fixed to a seabed (20), the mooring line including a segment (24),
the segment (24) comprising two extremities (26, 28), and a plurality of strands (30) comprising an elastomeric material and extending between the two extremities (26, 28) along a longitudinal direction (L) when the strands (30) are respectively subject to tensioning efforts (F; F1, F2),
each of the strands (30) having two end parts (44) and a median part (46) along the longitudinal direction (L),
the median part (46) having a cross-section (S) perpendicularly to the longitudinal direction (L), the cross-section (S) having an elongated shape when the strands (30) are at rest, the elongated shape defining a length (L1) in a first transverse direction (T1) perpendicular to the longitudinal direction (L), and a width (L2) in a second transverse direction (T2) perpendicular to the longitudinal direction (L) and to the first transverse direction (T1),
at least one of the two extremities (26, 28) comprising steel and being adapted for applying each of the tensioning efforts (F; F2, F3) respectively on one of the two end parts (44) of each of the strands (30),
said one of the two end parts (44) of each of the strands (30) having an enlarged portion (52) with a maximum width (L3) along the second transverse direction (T2) when the strands (30) are at rest and parallel to each other, the maximum width (L3) of said one of the two end parts (44) being greater than the width (L2) of the elongated shape.

2. The mooring line (22) according to claim 1, wherein the cross-section has a rectangular shape with rounded corners (50).

3. The mooring line (22) according to claim 1 or 2, wherein a ratio of the length (L1) of the elongated shape divided by the width (L2) of the elongated shape is comprised between 3.0 and 20, preferably between 5.0 and 10.

4. The mooring line (22) according to any one of claims 1 to 3, wherein a ratio of said maximum width (L3) divided by the width (L2) of the elongated shape is comprised between 1.3 and 6.

5. The mooring line (22) according to any one of claims 1 to 4, wherein said one of the two extremities (26, 28) defines a plurality of primary housings (68), and comprises a plurality of blocking members (70), each of the primary housings (68) being adapted for respectively receiving one of the blocking members (70) for forming a secondary housing (72) adapted to receive said enlarged portion (52), said enlarged portion (52) being adapted for being retained in the secondary housing (72).

6. The mooring line (22) according to claim 5, wherein:
- said enlarged portion (52) has a flaring shape away from the median part (46) with an increasing width (L3) defined along the second transverse direction (T2), and
- said secondary housing (72) has a flaring shape adapted for cooperating with the flaring shape of said enlarged portion (52) in order to retain said enlarged portion (52) in the secondary housing (72).

7. The mooring line (22) according to claim 5 or 6, wherein:
- each of the primary housings (68) is delimited by two opposite walls (74) along the second transverse direction (T2),
- said enlarged portion (52) defines two lateral surfaces (58) along the second transverse direction (T2), and
- each of the blocking members (70) defines two opposite surfaces (76) along the second transverse direction (T2) adapted for being in surface contact respectively with one of said two walls (74) and one of said two lateral surfaces (58), the other one of said two lateral surfaces (58) being in surface contact with the other one of said two walls (74).

8. The mooring line (22) according to claim 7, wherein
- said two opposite walls (74) define a flaring shape away from the median part (46) with an increasing width (L4) defined along the second transverse direction (T2), and
- said two opposite surfaces (76) define a width (L5) along the second transverse direction (T2), said width (L5) decreasing away from the median part (46).

9. The mooring line (22) according to any one of claims 5 to 8, wherein said one of the two end parts (44) of each of the strands (30) comprises:
- two branches (54) comprising an elastomeric material, the two branches (54) protruding from said enlarged portion (52) in the longitudinal direction (L) and being spaced apart from each other in the second transverse direction (T2), and
- a wedge member (56) fixed to the two branches (54) and extending between the two branches (54) in the second transverse direction (T2).

10. The mooring line (22) according to any one of claims 1 to 4, wherein:
- said strands (30) form a plurality of loops (78), each of the loops (78) comprising one of the two end parts (44) of one of the strands (30) and one of the two end parts (44) of another one of the strands (30), and
- said one of the two extremities (26, 28) comprises a plurality of supports (86) partially surrounded by one of the loops (78), each of the supports (86) being adapted for apply an effort (F1) on one of the loops, said effort (F1) being a sum of two of said tensioning efforts (F2, F3).

11. The mooring line (22) according to claim 10, each of the supports (86) extends along the first transverse direction (T1), each of the loops (78) at least partially surrounding one of the supports (86) about the first transverse direction (T1).

12. The mooring line (22) according to claim 10 or 11, wherein each of the loops (78) is formed by two of the strands (30), said two of the strands (30) being successive in the second transverse direction (T2).

13. The mooring line (22) according to any one of claims 10 to 12, wherein each of the supports (86) comprises a low friction material, such as PTFE, in contact with one of the loops (78).

14. The mooring line (22) according to any one of claims 10 to 13, wherein said one of the two extremities (26, 28) comprises a main part (84), each of the supports (86) comprising:
- a shaft (88) movable with respect to the main part (84) between a mounted position, in which the shaft (88) is mounted on the main part (84), and rest position, in which the shaft (88) is away from the main part (84), and
- a peripheral part (90) at least partly surrounding the shaft (88).

15. An assembly (10) comprising:
- a floating platform (12), preferably a wind turbine platform, adapted for floating on a body of water (14),
- an anchoring system (18) adapted for being fixed to a seabed (20), and
- at least one mooring line (22) according to any one of the claims 1 to 14, the mooring line (22) being attached to the platform (12) and to the anchoring system (18).
